# FASCICULE DE BREVET EUROPEEN

(11) **EP 0 275 722 B1**
(45) Date de publication et mention de la délivrance du brevet: **20.01.1993**
(21) Numéro de dépôt: 87402557.0
(22) Date de dépôt: 12.11.1987
(51) Int. Cl.: D06M 17/00, A41D 27/06

(54) **Produit thermocollant et procédé de fabrication**
Thermoadhäsiver Gegenstand und Verfahren zur Herstellung
Thermally adhering product and process for its manufacture

(30) Priorité: 14.11.1986 FR 8615878
(43) Date de publication de la demande: 27.07.1988
(73) Titulaire: LAINIERE DE PICARDIE: Société anonyme, 80200 Peronne (FR)
(72) Inventeur: Groshens, Pierre, F-80200 Péronne (FR)
(74) Mandataire: Derambure, Christian

(56) Documents cités:
- FR-A- 1 415 073
- FR-A- 2 241 604
- GB-A- 549 451
- GB-A- 761 364
- US-A- 2 438 176
- US-A- 4 204 017

## Description

L'invention concerne un entoilage textile thermocollant et son procédé de fabrication.

Les réactions de polymérisation sont utilisées depuis longtemps dans l'industrie textile pour le collage de nappes : le document US-A-2.438.176, publié en 1948, décrit déjà l'utilisation de la réaction d'alcools polyvinyliques avec un aldéhyde pour coller plusieurs substrats textile et réaliser un tissu imperméable aux gaz.

De même, le document GB-A-549 451 décrit le collage de nappes de tissus imprégnées d'un mélange d'alcool polyvinylique et d'aldéhyde par chauffage.

En 1965, le document FR-A-1.415.073 décrit le collage de deux nappes fibreuses au moyen de deux constituants durcissant à la température ambiante et comprenant des résines à base d'époxyde ou de polyamide.

Le document GB-A-761 364 propose un procédé de collage de deux nappes textiles, selon lequel les nappes sont imprégnées d'une résine polyester non saturée et d'un catalyseur de polymérisation, puis mouillées avec une solution à base d'un monomère vinylique polymérisable.

On connaît égalelment l'emploi de produits thermocollants utilisables dans l'industrie textile, pour les doublure ou triplure notamment. Ces produits thermocollants comprennent d'une part, un substrat textile continu, tissé, tricoté ou non tissé et d'autre part, des points de matière thermocollante répartis sur l'une des faces externes du substrat. La matière collante comprend des polymères (notamment des copolyamides, des copolyesters, des polyéthylènes, des copolymères de polyéthylène ou éventuellement des chlorures de polyvinyle ou des polyuréthanes) ayant la propriété de fondre à des températures relativement basses sous faible pression. Plus précisément, ces polymères ont des masses moléculaires et des viscosités - à l'état fondu - suffisamment faibles pour fondre rapidement et plus facilement sous l'effet combiné de la chaleur et de la pression.

De tels produits thermocollants sont employés par les confectionneurs avec des presses à vaporisation de vapeurs ou thermiques. La pression employée est de l'ordre de quelques décibars à quelques bars, la température de l'ordre 120°C à 180°C, et la durée relativement courte, de l'ordre de 10 à 30 secondes.

Ces produits thermocollants posent, généralement, le problème du transpercement du substrat textile par la matière collante lors de leur emploi par les confectionneurs, du fait du fluage des polymères constituant cette matière collante, lorsque'elle est soumise simultanément à la chaleur, et à une pression, et éventuellement à une vaporisation.

On a envisagé, jusqu'à présent, diverses solutions en vue de remédier à ce problème. Une première solution connue (brevets DE-A-2 214 236 et 2 231 723) consiste à superposer deux ou plusieurs couches de polymères de caractéristiques physiques (notamment viscosité et température de fusion) différentes. Une seconde solution (brevet FR 85 13 143) consiste en un procédé particulier d'association de la matière thermocollante au substrat textile avec pour fonction d'éviter la pénétration excessive de la matière thermocollante dans le substrat textile. Dans le document FR-A-2.241.604, il est proposé de réaliser une couche de séparation entre l'adhésif fusible et le support textile. Selon cette technique cette couche se distingue non seulement graduellement mais par son principe même de la couche thermoadhésive.

Ces trois solutions présentent, cependant, des inconvénients ou limites. En ce qui concerne la première et la troisième, elles nécessitent plusieurs polymères distincts et leur association au substrat. En ce qui concerne la seconde, elle implique un procédé spécifique de réalisation du produit thermocollant.

L'invention a pour objet de remédier à ces inconvénients ou limites. Elle a également pour objet d'éviter l'emploi et l'association au substrat textile de deux ou plusieurs matières collantes distinctes. Elle a enfin pour objet de permettre la réalisation d'un tel produit thermocollant de façon aussi avantageuse que possible.

A cet effet, et selon un premier aspect, l'invention propose un entoilage thermocollant comprenant d'une part un substrat textile tissé, tricoté ou non tissé, et, d'autre part, des points d'une matière thermocollante de composition unique répartis sur l'une des faces externes du substrat, plus spécialement à base de polymères, caractérisé par le fait qui'il comporte au moins une matière réactive ayant comme caractéristique de réagir avec une partie de la matière thermocollante sous l'effet d'au moins un moyen reactif qui est un apport de chaleur et lou une irradiation UV et lou un bombardement électronique, et qui amorce, assure ou favoriser cette réaction de manière à modifier partiellement la structure chimique de la matière thermocollante pour empêcher la matière thermocollante de coller à travers le substrat sous l'effet de la chaleur, de la pression ou de la vapeur.

Selon un second aspect, l'invention propose un procédé de réalisation d'un entoilage thermocollant, dans lequel on répartit des points d'une matière thermocollante de composition unique plus spécialement à base de polymères, sur l'une des faces d'un substrat textile tissé, tricoté ou non tissé caractérisé par le fait qu'on associe à la matière thermocollante au moins une matière réactive et au moins un moyen réactif qui est un apport de chaleur, et/ou une irradiation UV et/ou un bombardement électronique, en vue d'une réaction entre la matière réactive et la matière thermocollante, modifiant la structure chimique d'une partie de la matière thermocollante, en contact avec le substrat textile de manière à empêcher la matière thermocollante de coller à travers le substrat lors de son utilisation.

L'invention se distingue de l'état de la technique en ce que les propriétés thermocollantes non souhaitées de la matière thermocollante - provoquant par exemple le transpercement indésirable du substrat - sont éliminées ou, à tout le moins, diminuées par une action directe sur la matière thermocollante plutôt que par l'adjonction d'autres matières thermocollantes différentes ou que par des procédés spéciaux de réalisation essentiellement physiques.

L'invention sera mieux comprise grâce à la description qui suivra.

Un entoilage thermocollant selon l'invention comprenant d'une part, un substrat textile tissé, tricoté ou non tissé et, d'autre part, des points d'une matière thermocollante de composition unique répartis sur l'une des surfaces externes du substrat, plus spécialement à base de polymères, comporte aussi des moyens, de nature chimique, agissant sur la matière thermocollante en vue de modifier sa structure chimique, partiellement, à l'interface avec le substrat, de manière à empêcher la matière thermocollante de coller à travers le substrat sous l'effet de la chaleur et/ou de la pression.

Le substrat textile est en soi connue de l'homme de l'art, ne fait pas en soi l'objet de l'invention et pour cette raison n'est pas décrit ici plus en détail.

Il en est de même de la structure générale du produit thermocollant comportant une matière thermocollante répartie en points sur le substrat.

Les moyens de nature essentiellement chimique propres à modifier la structure chimique de la matière thermocollante comportent au moins une matière réactive ainsi qu'au moins un moyen réactif apte à amorcer, assurer, favoriser, la réaction entre la matière réactive et la matière thermocollante.

La matière réactive peut appartenir à différentes catégories et notamment la catégorie des produits thermodurcissables aminoplastes, notamment les urée-formol et mélamine formol; la catégorie comprenant des molécules simples ou des polymères portant au moins une fonction isocyanate bloquée ou non; la catégorie comprenant des molécules simples ou des polymères portant au moins une fonction aziridine; la catégorie des polymères modifiés portant au moins une fonction chimique réactive. Dans ce dernier cas, la fonction réactive est notamment une fonction époxy ou une fonction vinylique.

Le moyen réactif est un apport de chaleur et/ou une irradiation UV, et/ou un bombardement électronique, ou tout moyen équivalent.

Le moyen réactif peut être utilisé en présence de catalyseurs : catalyseur acide et/ou sel d'ammonium et/ou sel de magnésium (produit thermodurcissable aminoplaste); catalyseur acide ou alcalin (fonction isocyanate), catalyseur basique (fonction aziridine).

Le moyen réactif de la réaction de réticulation du polymère modifié à fonction réactive epoxy est la mise en contact avec des molécules d'amine ternaire et/ou de polyamine et/ou d'anhydride.

Le moyen réactif de la réaction de réticulation du polymère thermocollant et du polymère modifié à fonction réactive vinylique est la mise en contact de produits de la catégorie des peroxydes en présence de chaleur.

Le moyen réactif de la réaction de réticulation du polymère thermocollant et du polymère modifié à fonction réactive vinylique est la mise en contact de produits photoinitiateurs en présence d'une irradiation UV.

Dans ce dernier cas, il est prévu, préférentiellement, au moins un agent photoinhibiteur associé au moyen réactif de manière à limiter la réaction de réticulation.

Le produit thermocollant peut comporter, également, un polymère thermodurcissable.

De façon préférentielle, la matière thermocollante est un polymère qui appartient à la catégorie des copolyamide, copolyester, polyéthylène, copolymère de polyéthylène, polyuréthane, chlorure de polyvinyle.

La matière thermocollante à structure modifiée après mise en oeuvre de la matière réactive et du moyen réactif est soit un polymère thermoplastique présentant des propriétés physico-chimiques, notamment de fluage, de viscosité à température de fusion, différentes de celles de la matière themocollante non modifiée, soit un polymère thermodurcissable non fusible.

L'invention sera bien comprise grâce à plusierus exemples ci-dessous, seulement explicatifs et nullement limitatifs dans le cas particulier d'une matière themocollante constituée par des copolyamides. Ces copolyamides (6, 6.6, 11, 12 etc ...) peuvent être représentées de la manière suivante :

H₂N - [PA] - COOH

Le motif PA étant une chaîne aliphatique ou aromatique de n motifs simples, pouvant être compris entre quelques centaines et quelques milliers.

Les deux sites réactifs importants : le site carboxylique COOH et le site amine primaire NH , peuvent réagir chimiquement avec des matières réactives pour former des produits modifiés pouvant être représentés de la manière suivante : 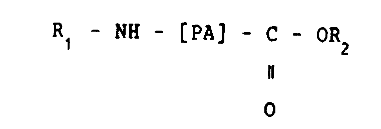
où R et R sont des molécules mono, di ou trifonctionnelles, saturées ou non, aliphatique ou aromatique, et/ou contenant ou non des hétéroatomes.

### Exemple 1

Méthylolurée de formule générale 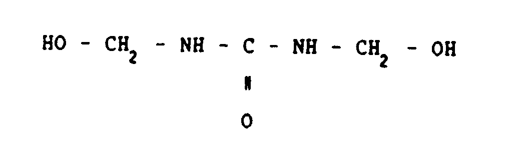
réagissant avec la fonction acide du polyamide thermocollant pour donner un nouveau polymère difonctionnel du type : 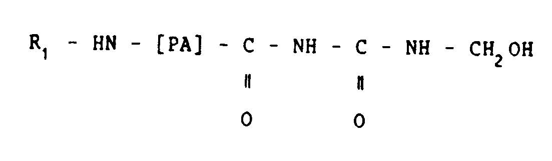
possédant encore 2 fonctions réactives (-NH et/ou -OH)

### Exemple 2

Mélamine de formule générale 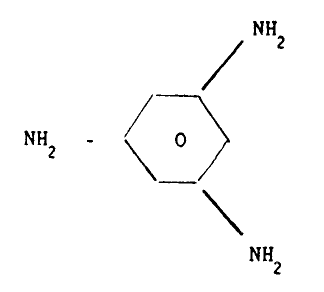
réagissant avec 1, 2 ou 3 macromolécules de polyamide thermocollant pour donner de nouveaux polymères mono, di ou tridimensionnels du type :

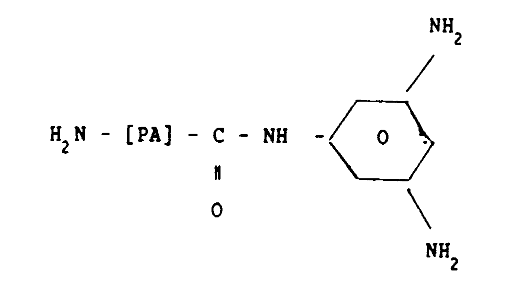

### Exemple 3 Isocyanates et polyisocyanates de formule générale

R - N = C = O

où R peut porter un ou plusieurs motifs isocyanates réagissant avec le polyamide thermocollant pour donner des polymères mono, di ou tridimensionnels du type :

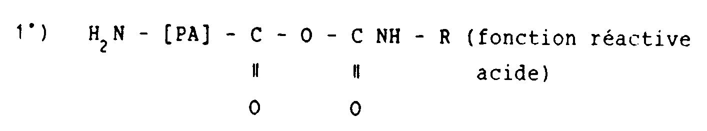

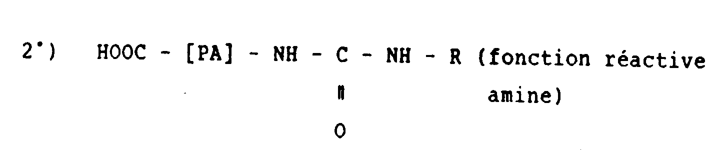

### Exemple 4

Aziridine et polyaziridine de formule générale 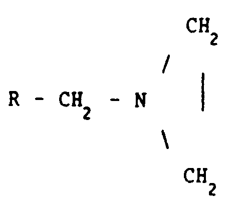
où R peut porter un ou plusieurs motifs aziridine réagissant avec la fonction acide du polyamide thermocollant pour donner des polymères mono, di ou tridimensionnels de type : 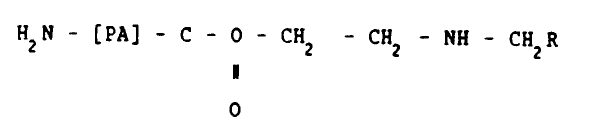
En variante, au lieu de polyamide, en tant que matière thermocollante on peut employer également des polyamides modifiés comportant des sites éminemment réactifs.

La composition préférée de la matière réactive est alors la suivante :
- 20% d'Aziridine polyfonctionnelle
- 10% d'Epaississant acrylique
- 0,5% d'Ammoniaque à 10%
- 69,5% d'Eau dont le ph est compris entre 7 et 9

### Exemple 5

Polyamides à groupements vinyliques de formule générale 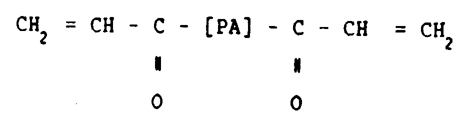
qui en présence de peroxydes ou de photoinitiateurs pourront donner de nouvelles macromolécules polydimensionnelles.

### Exemple 6 :

Polyamide à groupement epoxy de formule générale 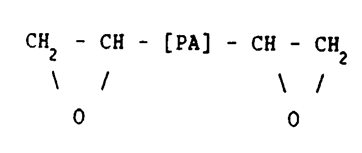
dont la réactivité est comparable à celle des résines epoxy face à des agents de réticulation du type amine ternaire, polyamines ou anydrides.

L'invention concerne aussi un procédé de réalisation d'un entoilage thermocollant, dans lequel on répartit des points d'une matière thermocollante, plus spécialement, à base de polymères, notamment en poudre ou sous forme pâteuse, sur l'une des faces d'un substrat textile tissé, tricotée ou non tissé caractérisé par le fait qu'on associe à la matière thermocollante des moyens, de nature essentiellement chimiques, notamment au moins une matière réactive et au moins un moyen réactif qui est un apport de chaleur et/ou une irradiation UV et/ou un bombardement électronique, en vue d'une réaction entre la matière réactive et la matière thermocollante, modifiant la structure chimique de la matière themocollante, au moins partiellement.

Selon une variante possible, on réalise la réaction de modification de la matière thermocollante avant de répartir les points de matière thermocollante sur le substrat.

Selon une autre variante possible, on réalise la réaction de modification de la matière thermocollante après avoir réparti les point de matière thermocollante sur le substrat.

Par exemple, on associe d'abord la matière réactive au substrat puis on associe la matière thermocollante. Ou encore, on associe d'abord la matière thermocollante au substrat puis on associe la matière réactive.

Selon un perfectionnement de l'invention, on associe au produit thermocollant, après la réaction de modification de la matière thermocollante, un polymère thermodurcissable.

Selon une variante possible, on associe la matière thermocollante et la matière réactive sur la même face du substrat.

Selon une autre variante possible, on associe la matière thermocollante et la matière réactive sur les deux faces opposées du substrat.

Ainsi, selon une forme de réalisation possible du procédé, on associe d'abord au substrat la matière réactive, notamment par foulardage ou dépôt à partir d'une suspension dans une mousse, puis on dépose les points de matière thermocollante sur le substrat, notamment par enduction.

Dans une autre forme de réalisation possible, on dépose d'abord les points de matière thermocollante sur le substrat, notamment par enduction, puis on associe au substrat la matière réactive, notamment par vaporisation ou procédé de léchage ou par contact.

Cinq formes d'exécution du procédé sont maintenant décrites plus en détail.

Dans une première forme d'exécution (plein bain avec modification chimique après enduction) on utilise des matières réactives solubles dans l'eau ou un solvant simple (alcool, solvant chloré, etc...). On traite le substrat avec la matière réactive, en présence de catalyseur de réaction - avant dépôt des points de matière thermocollante - par toute technique d'apprêt notamment par foulardage ou épuisement. Puis, on dépose les points de matière thermocollante.

La réaction de modification de la structure chimique de la matière thermocollante est déclenchée par un moyen réactif approprié tel que la chaleur. La nature et le degré de ce moyen réactif sont déterminés selon de simples opérations d'exécution d l'homme de métier, pour répondre aux exigences suivantes : permettre au moins l'amorçage de la réaction; ne pas permettre l'autoréticulation de la matière réactive; ne pas permettre la dégradation de matière thermocollant et du substrat.

Dans une deuxième forme d'exécution (vaporisation) ou on pulvérise un brouillard d'une solution de la matière réactive sur la face du substrat opposée à celle où les points de matière thermocollante ont déjà été déposés. Cette forme d'exécution a l'avantage de limiter le taux de matière réactive déposée sur le substrat et de diriger la matière réactive vers la matière thermocollante à travers les trous ou perforations du substrat.

Dans la troisième forme d'exécution, on mélange intimement la matière thermocollante et la matière réactive, puis on les dépose ainsi mélangées sur l'une des faces du substrat. La réaction chimique de modification est amorcée par un moyen réactif tel que traitement thermique ou bombardement électronique ou UV.

Dans la variante où le moyen réactif est un traitement thermique, le substrat enduit du mélange de matière thermocollante et de matière réactive passe sur un cylindre chauffé à une température (110°C à 180°C) et pendant une durée propre à permettre l'amorçage de la réaction mais non la réticulation de la matière réactive ou la dégradation de la matière thermocollante ou du substrat.

Dans la variante par bombardement électronique, on prévoit d'ajouter au mélange de matière thermocollante et de matière réactive un agent photoinhibiteur pour limiter la propagation de la réaction chimique de modification. La mise en oeuvre du procédé consiste à faire passer le substrat enduit du mélange devant une source photonique ou électronique située du côté de la face non enduite du substrat, de manière que les particules bombardent préférentiellement les zones qui doivent l'être, c'est-à-dire, les trous ou perforations du substrat, en regard de la matière thermocollante. La durée du bombardement est déterminée, par de simples opérations d'exécution à la portée de l'homme de métier en fontion de la puissance de la source du rayonnement, de la nature de substrat et de ratios matière thermocollante/matière réactive/agent photoinhibiteur.

Dans une quatrième forme d'exécution, on enduit d'abord le substrat avec la matière thermocollante à laquelle est mélangée la matière réactive. Puis, on met en oeuvre les moyens réactifs permettant la réaction de modification notamment ainsi que décrit pour la troisième forme d'exécution, jusqu'à réticulation complète de la matière thermocollante enduite. Puis on réalise une seconde enduction sur la première enduction, avec la matière thermocollante non modifiée. Cette forme d'exécution est différente de la technique connue d'enduction de deux matières thermocollantes totalement différentes. Elle a l'avantage de faciliter la mise en oeuvre du produit thermocollant pour le confectionneur.

Dans une cinquième forme d'exécution on applique sur un tapis non adhérent par exemple siliconé ou perfluoré une enduction de matière thermocollante formant des points. Cette application est faite avec un cadre rotatif.

La matière thermocollante initialement dispersée en phase aqueuse ou dissoute dans un solvant est séchée. Ce séchage est obtenu par le passage du tapis siliconé dans un four maintenu à la température approximative de 160°C. Il assure l'évaporation de l'eau ou du solvant et permet d'obtenir une homogénéité du point de fusion du polymère thermocollant.

A la sortie du four, il est déposé à la surface des points thermocollants une quantité contrôlée de matière réactive par un cylindre lécheur.

Le substrat textile est alors appliqué sur la surface supérieure des points et l'ensemble est passé sous une calandre afin de transférer l'intégralité des points sur le substrat textile.

Le substrat textile est ainsi enduit de points thermocollants avec une couche de matière réactive interposée.

Il passe dans un four maintenu à une température comprise entre 110° C et 130°C pour faire réagir partiellement de la matière réactive avec le polymère thermocollant.

D'autre formes d'exécution peuvent être encore envisagées : Dépôt de la matière réactive sous forme de mousse sur l'une ou l'autre des faces du substrat avant ou après enduction avec la matière thermocollante; léchage par cylindre lisse ou perforé avant de déposer la matière réactive sur l'une ou l'autre des faces du substrat; léchage par cylindre lisse revêtu ou non de caoutchouc silicone enduit de la matière réactive; peignage de l'une ou l'autre des faces du substrat par des fils de soie imprégnés de la matière réactive; dépôt de gouttes de solution de matière réactive à l'aplomb et sur la face opposée à celle où la matière a été déposée.

## Revendications

1. Entoilage thermocollant comprenant d'une part un substrat textile tissé, tricoté ou non tissé et, d'autre part, des points d'une matière thermocollante de composition unique répartis sur l'une des face externes du substrat, plus spécialement à base de polymères, caractérisé par le fait qu'il comporte au moins une matière réactive ayant comme caractéristique de réagir avec une partie de la matière thermocollante sous l'effet d'au moins un moyen réactif qui est un apport de chaleur et/ou une irradiation UV, et/ou un bombardement électronique, et qui amorce, assure ou favorise cette réaction de manière à modifier partiellement la structure chimique de la matière thermocollante pour empêcher la matière thermocollante de coller à travers le substrat sous l'effet de la chaleur, de la pression ou de la vapeur.

2. Entoilage thermocollant selon la revendication 1, caractérisé par le fait que la matière réactive appartient à la catégorie des produits thermodurcissables aminoplastes notamment les urée-formol ou les mélamine-formol, et que le moyen réactif est utilisé en présence d'un mélange comprenant au moins un catalyseur acide ou un sel d'ammonium ou un sel de magnésium.

3. Entoilage thermocollant selon la revendication 1, caractérisé par le fait que la matière réactive appartient à la catégorie comprenant des molécules simples ou des polymères portant au moins une fonction isocyanate bloquée ou non et que le moyen réactif est utilisé en présence d'un catalyseur ou alcalin.

4. Entoilage thermocollant selon la revendication 1, caractérisé par le fait que la matière réactive appartient à la catégorie comprenant des molécules simples ou des polymères portant au moins une fonction aziridine et que le moyen réactif est utilisé en présence d'un catalyseur basique.

5. Entoilage thermocollant selon la revendication 1, caractérisé par le fait que la matière réactive appartient à la catégorie des polymères portant au moins une fonction chimique réactive.

6. Entoilage thermocollant selon la revendication 5, caractérisé par le fait que la fonction chimique réactive est une fonction epoxy et que le moyen réactif de la réaction de la réticulation du polymère thermocollant et du polymère modifié à fonction réactive epoxy est mise en contact avec des molécules d'amine ternaire et/ou de polyamine et/ou d'annydride.

7. Entoilage thermocollant selon la revendication 5 caractérisé par le fait que la fonction chimique réactive est une fonction vinylique et que le moyen réactif de la réaction de réticulation du polymère thermocollant et du polymère modifié à fonction réactive vinylique est la mise en contact de produits de la catégorie des peroxydes en présence de chaleur.

8. Entoilage thermocollant selon la revendication 5 caractérisé par le fait que la fonction chimique réactive est une fonction vinylique et que le moyen réactif de la réaction de réticulation du polymère modifié à fonction réactive vinylique est la mise en contact de produits photoinitiateurs en présence d'une irradiation UV.

9. Entoilage thermocollant selon la revendication 8 caractérisé par le fait qu'au moins un agent photoinhibiteur est associé au moyen réactif de manière à limiter la réaction de réticulation.

10. Entoilage thermocollant selon l'une quelconque des revendications 1 à 9 caractérisé par le fait qu'il est associé après réaction chimique à un polymère thermodurcissable.

11. Entoilage thermocollant selon l'une quelconque des revendications 1 à 10 caractérisé par le fait que la matière thermocollante comprend un polymère qui appartient à la catégorie des copolyamide, copolyester, polyéthylène, copolymère de polyéthylène, polyuréthane, chlorure de polyvinyle.

12. Entoilage thermocollant selon l'une quelconque des revendications 1 à 11 caractérisé par le fait que la matière thermocollante à structure modifiée est soit un polymère thermoplastique présentant des propriétés physicochimiques, notamment de fluage, de viscosité à température de fusion, différentes de celles de la matière thermocollante non modifiée, soit un polymère thermodurcissable non fusible.

13. Procédé de réalisation d'un entoilage thermocollant, dans lequel on répartit des points d'une matière thermocollante de composition unique, plus spécialement à base de polymères, sur l'une des faces d'un substrat textile tissé, tricoté ou non tissé caractérisé par le fait qu'on associe à la matière thermocollante au moins une matière réactive et au moins un moyen réactif qui est un apport de chaleur et/ou une irradiation UV et/ou un bombardement électronique, en vue d'une réaction entre la matière réactive et la matière thermocollante, modifiant la structure chimique d'une partie de la matière thermocollante, en contact avec le substrat textile de manière à empêcher la matière thermocollante de coller à travers le substrat lors de son utilisation.

14. Procédé selon la revendication 13 caractérisé par le fait que le produit thermocollant est associé après la réaction de modification de la matière thermocollante à un polymère thermodurcissable.

15. Procédé selon l'une quelconque des revendications 13 et 14 caractérisé par le fait qu'on associe d'abord au substrat la matière réactive, par foulardage ou dépôt à partir d'une suspension dans une mousse, puis on dépose les points de matière thermocollante sur le substrat par enduction.

16. Procédé selon l'une quelconque des revendications 13 et 14, caractérisé par le fait qu'on dépose d'abord les points de matière thermocollante sur le substrat par enduction, puis on associe la matière réactive par vaporisation, léchage ou par contact.

17. Procédé selon la revendication 13 caractérisé en ce que la matière thermocollante est déposée par enduction en forme de points sur un tapis non adhérent à l'aide d'un cadre rotatif, le tapis non adhérent qui est un tapis siliconé est passé dans un four à 160°C de manière à sécher la matière thermocollante, une quantité contrôlée de matière réactive est déposée par un cylindre lécheur sur les points thermocollants, le substrat textile est alors appliqué sur la surface supérieure des points et l'ensemble est passé sous une calandre afin de transférer les points sur le textile, l'ensemble est passé dans un four à une température comprise entre 110°C et 130°C pour permettre la réaction partielle du thermocollant et de la matière réactive.

## Claims

1. Heat fusible textile for stiffening comprising, on the one hand, a textile substrate woven, knitted or not woven and, on the other hand, spots of a single component heat fusible material distributed on one of the outer faces of the substrate, more particularly, a polymer based material, characterised in that it comprises at least one reactive material having the property of reacting with a part of the heat fusible material under the effects of at least one reactive means which is a contributor of heat and/or UV irradiation and/or electronic bombardment and which initiates, assures or assists in this reaction in order to partially modify the chemical structure of the heat fusible material in order to prevent the heat fusible material bonding through the substrate under the effects of the heat, pressure or steam.

2. Heat fusible textile for stiffening in accordance with claim 1, characterised in that the reactive material belongs to the category of aminoplastic thermohardening products, in particular, urea formaldehydes or melamine formaldehydes and that the reactive means is used in the presence of a mixture comprising at least one acid catalyst or an ammonium salt or a magnesium salt.

3. Heat fusible textile for stiffening in accordance with claim 1, characterised in that the reactive material belongs to the category comprising single molecules or polymers with at least one isocyanate function, blocked or not blocked and that the reactive means is used in the presence of an alkaline catalyst.

4. Heat fusible textile for stiffening in accordance with claim 1, characterised in that the reactive material belongs to the category comprising single molecules for polymers with at least one aziridine function and that the reactive means is used in the presence of a basic catalyst.

5. Heat fusible textile for stiffening in accordance with claim 1, characterised in that the reactive material belongs to the category of polymers with at least one reactive chemical function.

6. Heat fusible textile for stiffening in accordance with claim 5, characterized in that the reactive chemical function is an epoxy function and that the reactive means for the reaction for cross linking of the heat fusible polymer and the modified polymer with an epoxy reactive function is placed in contact with the molecules of a ternary amine and/or a polyamide and/or an anhydride.

7. Heat fusible textile for stiffening in accordance with claim 5, characterized in that the reactive chemical function is a vinylic function and that the reactive means for the reaction for cross linking of the heat fusible polymer and the modified polymer with a vinylic reactive function is that products in the category of peroxides are placed in contact with heat.

8. Heat fusible textile for stiffening in accordance with claim 5, characterized in that the reactive chemical function is a vinylic function and that the reactive means for the reaction for cross linking of the modified polymer with a reactive vinylic function is that photo-initiator products are placed in contact with UV irradiation.

9. Heat fusible textile for stiffening in accordance with claim 8, characterized in that at least one photo-inhibitor agent is associated with the reactive means in order to limit the reaction for cross linking.

10. Heat fusible textile for stiffening in accordance with any one of claims 1 to 9, characterised in that it is associated with a thermohardening polymer following a chemical reaction.

11. Heat fusible textile for stiffening in accordance with any one of claims 1 to 10, characterised in that the heat fusible material comprises a polymer which belongs to the category of copolyamides, copolyesters, polyethylenes, polyethylene copolymers, polyurethanes or polyvinyl chlorides.

12. Heat fusible textile for stiffening in accordance with any one of claims 1 to 11, characterised in that the heat fusible material with a modified structure is either a thermoplastic polymer with physico-chemical properties, in particular, flow, viscosity, melt temperature, different to those of the unmodified heat fusible material or a non fusible thermohardening polymer.

13. Method for producing a heat fusible textile for stiffening in which spots of a heat fusible single component material, in particular, a polymer based material, is distributed over one of the faces of a textile substrate, woven, knitted or not woven, characterized in that at least one reactive material and at least one reactive means which is a contributor of heat and/or UV irradiation and/or electronic bombardment is associated with the heat fusible material to provide a reaction between the reactive material and the heat fusible material, modifying the chemical structure of one part of the heat fusible material in contact with the textile substrate in order to prevent the heat fusible material bonding through the substrate when in use.

14. Method in accordance with claim 13, characterized in that the heat fusible product is associated with a thermohardening polymer following the reaction for modification of the heat fusible material.

15. Method in accordance with any one of claims 13 and 14, characterised in that the reactive material is first associated with the substrate, by sizing or deposition, by means of a suspension in a foam, the spots of heat fusible material then being deposited on the substrate by coating.

16. Method in accordance with any one of claims 13 and 14, characterized in that the spots of heat fusible material are first deposited on the substrate by coating, the reactive material then being associated by vaporisation, smoothing or contact.

17. Method in accordance with claim 13, characterised in that the heat fusible material is deposited by coating, in the form of spots on a non adherent belt by means of a rotary frame, the said non adherent belt being silicon treated and passed through an oven at 160°C in order to dry the heat fusible material, a controlled quantity of reactive material being deposited by a smoothing roll on the heat fusible spots, the textile substrate then being applied to the upper surface of the spots and the assembly being passed under a calender in order to transfer the spots to the textile, the assembly being passed through an oven at a temperature of between 110°C and 130°C in order to permit a partial reaction between the heat fusible material and the reactive material.

## Patentansprüche

1. Heißklebende Einlage, umfassend einerseits ein gewobenes, gewirktes oder nichtgewobenes Textilsubstrat und andererseits Punkte aus einem heißklebenden Material einheitlicher Zusammensetzung, insbesondere auf Polymergrundlage, welche auf einer dar Außenflächen des Substrats verteilt sind, gekennzeichnet durch die Tatsache, daß sie wenigstens ein reaktionsfähiges Material enthält, welches die Eigenschaft besitzt, unter der Wirkung wenigstens eines reaktiven Mittels, welches eine Zufuhr von Wärme und/oder UV-Strahlung und/oder Elektronenbeschuß ist, und welches diese Reaktion einleitet, unterhält oder fördert, um die chemische Struktur des heißklebenden Materials teilweise zu verändern, mit einem Toll des heißklebenden Materials zu reagieren, um das heißklebende Material daran zu hindern, unter der Wirkung von Hitze, Druck oder Dampf durch das Substrat hindurch zu kleben.

2. Heißklebende Einlage gemäß Anspruch 1, gekennzeichnet durch die Tatsache, daß das reaktionsfähige Material der Klasse der wärmehärtbaren Aminoplast-Produkte, insbesondere den Harnstoff-Formaldehyden oder den Melamin-Formaldehyden, angehört, und daß das reaktionsfähige Mittel in Gegenwart eines Gemisches angewandt wird, welches wenigstens einen sauren Katalysator oder ein Ammoniumsalz oder ein Magnesiumsalz enthält.

3. Heißklebende Einlage gemäß Anspruch 1, gekennzeichnet durch die Tatsache, daß das reaktionsfähige Material der Klasse angehört, welche einfache Moleküle oder Polymere umfaßt, welche wenigstens eine blockierte oder nicht blockierte Isocyanatfunktion tragen, und daß das reaktionsfähige Mittel in Gegenwart eines sauren oder alkalischen Katalysators angewandt wird.

4. Heißklebende Einlage gemäß Anspruch 1, gekennzeichnet durch die Tatsache, daß das reaktionsfähige Material der Klasse angehört, welche einfache Moleküle oder Polymere umfaßt, welche wenigstens eine Aziridinfunktion tragen, und daß das reaktionsfähige Mittel in Gegenwart eines basischen Katalysators angewandt wird.

5. Heißklebende Einlage gemäß Anspruch 1, gekennzeichnet durch die Tatsache, daß das reaktionsfähige Material der Klasse der Polymeren angehört, welche wenigstens eine chemisch reaktionsfähige Funktion tragen.

6. Heißklebende Einlage gemäß Anspruch 5, gekennzeichnet durch die Tatsache, daß die reaktionsfähige, chemische Funktion eine Epoxyfunktion ist und daß das reaktive Mittel der Vernetzungsreaktion des heißklebenden Polymers und des mit einer reaktionsfähigen Epoxyfunktion modifizierten Polymers das Zusammenbringen mit tertiären Amin- und/oder Polyamin- und/oder Anhydridmolekülen ist.

7. Heißklebende Einlage gemäß Anspruch 5, gekennzeichnet durch die Tatsache, daß die reaktionsfähige, chemische Funktion eine Vinylfunktion ist und daß das reaktive Mittel der Vernetzungsreaktion des heißklebenden Polymers und des mit einer reaktionsfähigen Vinylfunktion modifizierten Polymers das Zusammenbringen mit Produkten aus der Klasse der Peroxide in Gegenwart von Wärme ist.

8. Heißklebende Einlage gemäß Anspruch 5, gekennzeichnet durch die Tatsache, daß die reaktionsfähige, chemische Funktion eine Vinylfunktion ist und daß das reaktive Mittel der Vernetzungsreaktion des mit einer reaktionsfähigen Vinylfunktion modifizierten Polymers das Zusammenbringen mit Photoinitiatoren in Gegenwart einer UV-Strahlung ist.

9. Heißklebende Einlage gemäß Anspruch 8, gekennzeichnet durch die Tatsache, daß wenigstens ein Lichtschutzmittel mit dem reaktiven Mittel verbunden ist, um die Vernetzungsreaktion zu begrenzen.

10. Heißklebende Einlage gemäß einem der Ansprüche 1 bis 9, gekennzeichnet durch die Tatsache, daß sie nach der chemischen Reaktion mit einem warmehärtbaren Polymer verbunden wird.

11. Heißklebende Einlage gemäß einem der Ansprüche 1 bis 9, gekennzeichnet durch die Tatsache, daß das heißklebende Material ein Polymer enthält, welches der Klasse aus Copolyamid, Copolyester, Polyethylen, Polyethylencopolymer, Polyurethan und Polyvinylchlorid angehört.

12. Heißklebende Einlage gemäß einem der Ansprüche 1 bis 11, gekennzeichnet durch die Tatsache, daß das heißklebende Material mit modifizierter Struktur entweder ein thermoplastisches Polymer ist, welches physikalisch-chemische Eigenschaften zeigt, insbesondere Fließfähigkeit, Viskosität beim Schmelzpunkt, die von denjenigen des nicht modifizierten heißklebenden Materials verschieden sind, oder ein unschmelzbares, wärmehärtbares Polymer ist.

13. Verfahren zur Herstellung einer heißklebenden Einlage, bei welchem man Punkte aus einem heißklebenden Material einheitlicher Zusammensetzung, insbesondere auf Polymergrundlage, auf einer der Seiten eines gewobenen, gewirkten oder nichtgewobenen Textilsubstrats verteilt, gekennzeichnet durch die Tatsache, daß man mit dem heißklebenden Material im Hinblick auf eine Reaktion zwischen dem reaktionsfähigen Material und dem heißklebenden Material wenigstens ein reaktives Mittel verbindet, welches eine Zufuhr von Wärme und/oder UV-Strahlung und/oder Elektronenbeschuß ist, wodurch die chemische Struktur eines Teils des heißklobenden Materials im Kontakt mit dem Textilsubstrat modifiziert wird, um das heißklebende Material daran zu hindern, vor seiner Verwendung durch das Substrat hindurch zu kleben.

14. Verfahren gemäß Anspruch 13, gekennzeichnet durch die Tatsache, daß das heißklebende Produkt nach der Modifizierungsreaktion des heißklebenden Materials mit einem wärmehärtbaren Polymer verbunden wird.

15. Verfahren gemäß einem der Ansprüche 13 und 14, gekennzeichnet durch die Tatsache, daß man zuerst das reaktionsfähige Material durch Aufklotzen oder Abscheidung aus einer Suspension in einem Schaumstoff mit dem Substrat verbindet und man dann die Punkte aus heißklebendem Material auf das Substrat durch Beschichten niederschlägt.

16. Verfahren gemäß einem der Ansprüche 13 und 14, gekennzeichnet durch die Tatsache, daß man zuerst die Punkte aus heißklebendem Material auf das Substrat durch Beschichten aufbringt, und man darauf das reaktionsfähige Material durch Verdampfung, Bestreichen oder durch Kontakt verbindet.

17. Verfahren gemäß Anspruch 13, gekennzeichnet durch die Tatsache, daß das heißklebende Material durch Beschichten mit Hilfe einer Rotationsdruckmaschine in Form von Punkten auf einen nichthaftenden Belag aufgebracht wird, der nichthaftende Belag, welcher ein silikonisierter Belag ist, bei 160°C einen Ofen durchläuft, um das heißklebende Material zu trocknen, eine kontrollierte Menge reaktionsfähigen Materials durch einen Streichzylinder auf den heißklebenden Punkten aufgebracht wird, das Textilsubstrat darauf auf die obenliegende Oberfläche der Punkte aufgetragen wird und das Ganze einen Kalander durchläuft, um die Punkte auf das Textil zu überführen, das Ganze einen Ofen bei einer Temperatur zwischen 110°C und 130°C durchläuft, um die teilweise Reaktion des Heißklebers und des reaktionsfähigen Materials zu gestatten.
